# EUROPEAN PATENT APPLICATION

(11) **EP 4 817 771 A1**
(43) Date of publication of application: **07.10.2026**
(21) Application number: 25167379.4
(22) Date of filing: 31.03.2025
(51) Int. Cl.: B23C 5/06, B23C 5/28, B23C 5/20

(54) **MILLING TOOL**

(71) Applicant: AB Sandvik Coromant, 811 81 Sandviken (SE)
(72) Inventor: Bergqvist, Viktor, 811 81 SANDVIKEN (SE)
(74) Representative: Sandvik

(57) **Abstract**

A milling tool comprising a tool body (2) with at least three insert pockets (10) separated from each other by partition structures (4) formed in the tool body. A cutting insert (20) with a circular cutting edge (27) is mounted in an insert seat in each insert pocket. Coolant discharge channels (31) are provided inside the tool body and associated to a respective cutting insert. Each coolant discharge channel opens into an axially forwardly facing external surface (4c) on a dedicated one of the partition structures (4) behind the associated cutting insert and is configured to eject a coolant jet obliquely outwards in relation to the centre axis (C) of the tool body and obliquely forwards in the direction of rotation (R) of the tool body in order to hit a target area (33) located at a distance from and behind the associated cutting insert, as seen in the direction of rotation (R) of the tool body.

## Description

### FIELD OF THE INVENTION AND PRIOR ART

The present invention relates to a milling tool according to the preamble of claim 1.

A milling tool may be provided with several indexable cutting inserts detachably mounted in a respective insert seat in a tool body of the milling tool, wherein the insert seats are distributed in a circumferential direction of the tool body. Each individual cutting insert may be provided with a circular cutting edge, as illustrated for instance in DE 102014211415 A1, EP 3 643 439 A1, US 6 053 671 A and JP 7340168 B1, wherein the cutting insert has a rake face and an abutment face arranged on opposite sides of the cutting insert and a peripheral surface that extends around the cutting insert between the rake face and the abutment face, and wherein the circular cutting edge is formed at an intersection between the rake face and the peripheral surface. A cutting insert of this type with a circular cutting edge is normally configured to abut against a tangentially facing bottom wall in an insert seat in a tool body through the abutment face and against one or more curved side support surfaces on an internal wall of the insert seat through a conically shaped abutment surface included in the peripheral surface of the cutting insert. The insert seats may form part of a respective insert pocket in the tool body, wherein each insert pocket in addition to an insert seat also comprises a chip clearance space in the form of a chip pocket or chip flute provided in the insert pocket adjacent to the insert seat and in front of it as seen in the intended direction of rotation of the tool body.

In order to increase the useful life of the cutting inserts, the interface between the cutting inserts and the workpiece may be cooled and lubricated by a flow of coolant during the milling operation, wherein the coolant may be supplied onto each cutting insert through coolant discharge channels in the tool body, which normally are configured to open into the insert pockets in the tool body. The supply of coolant onto the cutting inserts of a milling tool may for instance be achieved in the manner described in US 2021/0220956 A1, where coolant is introduced into a coolant supply recess inside the tool body from coolant supply channels in a tool holder and injected into each individual insert pocket through several coolant discharge channels that open into the associated insert pocket. Coolant may also be directed directly onto the peripheral surface of the cutting inserts of a milling tool through coolant discharge channels that open into a front face of the tool body, as described in DE 102014211415 A1. Directing coolant onto the peripheral surface of the cutting insert is considered advantageous because, during the cutting process, there is no chip that hides this surface.

When mounted in an insert seat in a tool body of a milling tool in any of its working positions, a cutting insert with a circular cutting edge has an arc-shaped active primary cutting edge formed by a segment of the circular cutting edge located between an axially foremost point on the circular cutting edge and a radially outermost point on the circular cutting edge, wherein an entering angle along this arc-shaped primary cutting edge varies from 0° at the axially foremost point on the circular cutting edge to 90° at the radially outermost point on the circular cutting edge. When the arc-shaped primary cutting edge cuts into a workpiece during a milling operation, the chip thickness varies at the different points along the part of the arc-shaped primary cutting edge that is in engagement with the workpiece, and increases from zero chip thickness at the axially foremost point on the circular cutting edge to a maximum chip thickness at the point on the arc-shaped primary cutting edge located at the level of the depth of cut. As a consequence of this varying chip thickness along the part of the arc-shaped primary cutting edge that is in engagement with the workpiece, the mechanical loads and heat loads on the cutting insert are non-uniformly distributed along this part of the arc-shaped primary cutting edge. Furthermore, during each revolution of the milling tool around its axis of rotation, the cutting insert undergoes two distinct phases: a cutting phase and a non-cutting phase. In the cutting phase, the arc-shaped primary cutting edge is in contact with and actively cuts into the workpiece. In the non-cutting phase, the arc-shaped primary cutting edge is out of contact with the workpiece. This intermittent cutting action of the cutting insert during the milling operation leads to an intermittent heat load on the cutting insert during the milling operation.

### OBJECT OF THE INVENTION

The object of the present invention is to provide a milling tool of the above-mentioned type that has a new and favourable design.

### SUMMARY OF THE INVENTION

According to the invention, said object is achieved by means of a milling tool having the features defined in claim 1.

The milling tool according to the invention comprises:
- a tool body having a front end and an opposite rear end, the rear end being configured for attachment to a machine, wherein a longitudinal centre axis of the tool body extends between the rear end and the front end of the tool body, and wherein the tool body has an axially rearwardly facing rear face at its rear end;
- at least three insert pockets provided in the tool body and distributed in a circumferential direction of the tool body, wherein each one of these at least three insert pockets comprises an insert seat and a chip clearance space associated with the insert seat and located adjacent to it, and wherein each two consecutive insert pockets of said at least three insert pockets are separated from each other in the circumferential direction of the tool body by a partition structure formed in the tool body, wherein the insert seat of each insert pocket is provided in the partition structure located directly behind the insert pocket as seen in the intended direction of rotation of the tool body and comprises a space configured to accommodate a cutting insert, this space being delimited by a tangentially facing bottom wall and an internal wall that extends transversely to the bottom wall;
- at least three cutting inserts, each of which being detachably mountable in different working positions in the insert seat of a respective insert pocket of said at least three insert pockets, wherein each cutting insert of said at least three cutting inserts comprises:
   - a rake face and an abutment face arranged on opposite sides of the cutting insert, the cutting insert having a centre axis that extends between the rake face and the abutment face, wherein the cutting insert, when mounted in the associated insert seat in any of its working positions, is configured to abut against the bottom wall of said space in the insert seat through the abutment face,
   - a peripheral surface extending around the cutting insert between the rake face and the abutment face, and
   - a circular cutting edge formed at an intersection between the peripheral surface and the rake face and extending around the centre axis of the cutting insert along a periphery of the rake face, wherein the cutting edge, when the cutting insert is mounted in the associated insert seat in any of its working positions, has a radially outermost point constituting the point on the cutting edge located at the longest distance from the centre axis of the tool body, a radially innermost point constituting the point on the cutting edge located at the shortest distance from the centre axis of the tool body and an axially foremost point constituting the foremost point on the cutting edge as seen in a reference direction from the rear end of the tool body towards the front end of the tool body in parallel with the centre axis of the tool body;
- a coolant supply recess provided inside the tool body and configured to extend at least partly around the centre axis of the tool body, wherein the coolant supply recess is arranged in a central bore in the tool body that opens into the rear face of the tool body; and
- at least three coolant discharge channels provided inside the tool body, each of which being associated to a respective cutting insert of said at least three cutting inserts, wherein each one of these coolant discharge channels is in fluid communication with the coolant supply recess.

Each one of said coolant discharge channels opens into an axially forwardly facing external surface on the partition structure in which the insert seat of the associated cutting insert is provided, at a position on this axially forwardly facing external surface between this insert seat and the insert pocket located directly behind this partition structure as seen in the intended direction of rotation of the tool body. Furthermore, each one of said coolant discharge channels is configured to eject a jet of coolant obliquely outwards in relation to the centre axis of the tool body and obliquely forwards in the intended direction of rotation of the tool body in such a direction that the jet of coolant is configured to hit a predefined imaginary surface in a target area located at a distance from and behind the cutting insert associated with the coolant discharge channel, as seen in the intended direction of rotation of the tool body, wherein said predefined imaginary surface consists of:
- a planar and annular first imaginary sub surface centred about the centre axis of the tool body and having a circular outer periphery touching said axially foremost point of the cutting edge on the cutting insert associated with the coolant discharge channel, wherein this first imaginary sub surface has a circular inner periphery with a radius corresponding to the distance between the centre axis of the tool body and said radially innermost point of the cutting edge on the cutting insert associated with the coolant discharge channel; and
- an adjacent second imaginary sub surface constituting an annular surface of revolution generated by rotating a section of the cutting edge on the cutting insert associated with the coolant discharge channel around the centre axis of the tool body, this section of the cutting edge being a section extending the shortest way along the cutting edge from said radially outermost point of the cutting edge to said axially foremost point of the cutting edge.

As specified above, the jet of coolant ejected from an individual coolant discharge channel is not configured to hit directly onto the peripheral surface of the cutting insert associated with the coolant discharge channel. On the contrary, the jet of coolant ejected from an individual coolant discharge channel is directed onto a spot, i.e. the above-mentioned target area, located closely behind the associated cutting insert, as seen in the intended direction of rotation of the tool body, and in such a direction that the peripheral surface of the cutting insert, each time when the cutting insert is in the above-mentioned cutting phase during a milling operation, is hit by coolant that splashes onto the peripheral surface of the cutting insert when the jet of coolant strikes the workpiece closely behind the cutting insert. Each time when the cutting insert is in the above-mentioned non-cutting phase during a milling operation, only a very small amount of coolant, or no coolant at all, from the jet of coolant ejected from the associated coolant discharge channel will splash onto the peripheral surface of the cutting insert. Hereby, the cooling effect on the cutting insert from the jet of coolant ejected from the associated coolant discharge channel is concentrated to the cutting phase of the cutting insert during each revolution of the milling tool, i.e. to the repeated periods during a milling operation when the heat load on the cutting insert is at its highest.

The invention is based on the realization that a constant and direct flushing of coolant onto the peripheral surface of a cutting insert with a circular cutting edge during a milling operation, i.e. also when the cutting insert is in the non-cutting phase, in combination with the above-mentioned non-uniform distribution of heat load along the arc-shaped primary cutting edge in the cutting phase of the cutting insert during each revolution of the milling tool, may accelerate the wear on the cutting insert and spoil the positive effects on the useful life of the cutting insert that come from the supply of coolant onto the cutting insert in the cutting phase during each revolution of the milling tool. In the milling tool of the present invention, a sort of indirect supply of coolant onto the cutting inserts is applied, wherein the amount of coolant supplied to the peripheral surface of the cutting inserts, and thereby the associated cooling effect on the cutting inserts, is automatically higher when the cutting inserts are in their cutting phase and lower when the cutting inserts are in their non-cutting phase. With the solution according to the invention, the positive effects on the useful life of the cutting insert associated with a supply of coolant onto the peripheral surface of the cutting insert in its cutting phase during each revolution of the milling tool are maintained, at the same time as the negative effects on the useful life of the cutting insert associated with a supply of coolant onto the peripheral surface of the cutting insert in its non-cutting phase during each revolution of the milling tool are avoided or at least decreased, which will result in an increase of the useful life of the cutting insert.

According to an embodiment of the invention, each coolant discharge channel of said at least three coolant discharge channels is rectilinear and has a longitudinal centre axis, which intersects said predefined imaginary surface in an imaginary intersection point, wherein the coolant discharge channel has an outlet opening that is provided in said axially forwardly facing external surface on the associated partition structure and formed by an open downstream end of the coolant discharge channel, and wherein the coolant discharge channel is configured to eject a jet of coolant from its outlet opening in a direction substantially co-axial with its centre axis. The rectilinear design of the coolant discharge channels makes it easy to predict the direction of the jet of coolant ejected from each coolant discharge channel and thereby makes it possible to obtain better results.

According to another embodiment of the invention, each coolant discharge channel of said at least three coolant discharge channels has such an orientation in the tool body that said imaginary intersection point associated with the centre axis of the coolant discharge channel is located at a distance from the centre axis of the tool body fulfilling the following condition:
R₂<R_{P}<R₁, preferably R₂<R_{P}≤R₁-(R₁-R₃)/2, more preferably R₂+(R₃-R₂)/2≤R_{P}≤R₁-(R₁-R₃)/2, where:
- R_{P} is the distance between the centre axis of the tool body and the imaginary intersection point,
- R₁ is the distance between the centre axis of the tool body and said radially outermost point of the cutting edge on the cutting insert associated with the coolant discharge channel,
- R₂ is the distance between the centre axis of the tool body and said radially innermost point of the cutting edge on the cutting insert associated with the coolant discharge channel, and
- R₃ is the distance between the centre axis of the tool body and said axially foremost point of the cutting edge on the cutting insert associated with the coolant discharge channel.

When R₂<R_{P}<R₁, an improved performance is observed in the most common applications where this type of milling tool is most frequently used. In a majority of applications, the axial depth of cut does not reach up to the radially outermost point of the cutting edge on the cutting insert. Hence, when R_{P}≤R₁-(R₁-R₃)/2 the usefulness of the tool is increased because the coolant is more directed to the areas below the most commonly used parts of the cutting edge at the same time as, thanks to splashing, the coolant also reaches the area below the radially outermost point of the cutting edge and makes the tool useful also when the axial dept of cut reaches up to the radially outermost point. A further improved effect is observed when R₂+(R₃-R₂)/2≤R_{P}.

According to another embodiment of the invention, each coolant discharge channel of said at least three coolant discharge channels has such an orientation in the tool body that a projection of its centre axis in a first radial plane that contains the centre axis of the tool body and goes through said imaginary intersection point associated with the centre axis of the coolant discharge channel forms an angle of 10-80°, preferably 15-70°, more preferably 20-65°, with the centre axis of the tool body. When said angle is 80° or smaller, an improved cooling effect is achieved. Thanks to the splashing effect, a larger area can be covered by the coolant. When said angle is larger than 80°, the coolant jet has a very dominant radial orientation, which may imply that the coolant will splash predominantly outwards and not splash forwards in the intended direction of rotation of the tool body if the coolant discharge channel is not oriented obliquely forwards in the intended direction of rotation of the tool body at a very large angle. Even better effect is observed when said angle is 70°or smaller and the best effect is observed when said angle is 65° or smaller. When said angle is smaller than 10°, it is observed that the spreading of coolant radially outwards can be inferior. When said angle is 10°or larger, improved cooling effect is observed. The results are further improved when said angle is 15° or larger, and best effects are observed when said angle is 20°or larger.

According to another embodiment of the invention, each coolant discharge channel of said at least three coolant discharge channels has such an orientation in the tool body that an extension of its centre axis beyond the associated imaginary intersection point extends in front of a first radial plane that contains the centre axis of the tool body and goes through this imaginary intersection point, as seen in the intended direction of rotation of the tool body, wherein a projection of the centre axis of the coolant discharge channel in a reference plane that is perpendicular to the centre axis of the tool body forms an angle of 5-35°, preferably 5-25°, more preferably 10-20°, with a line of intersection between this reference plane and said first radial plane. It has been observed that when said angle is 5-35°, the useful life of the cutting insert is improved in a variety of applications where this type of milling tool is used. When said angle is smaller than 5°, less coolant reaches the peripheral side of the cutting insert during its cutting phase and the positive effect on the useful life of the cutting insert associated with a supply of coolant onto the peripheral surface of the cutting insert in its cutting phase is decreased. When said angle is larger than 35°, the useful life of the cutting insert decreases in some applications because coolant reaches the peripheral side of the cutting insert to a greater extent during its non-cutting phase due to unintentional splashing as a result of the coolant jet hitting for example the workpiece fixture. Further improvement on the useful life of the cutting insert is observed when said angle is 25° or smaller. When said angle is 10-20°, best balance is achieved between the positive effects associated with a supply of coolant onto the peripheral surface of the cutting insert in its cutting phase and the negative effects associated with a supply of coolant onto the peripheral surface of the cutting insert in its non-cutting phase due to unintentional splashing as a result of the coolant jet hitting for example the workpiece fixture.

According to another embodiment of the invention, each coolant discharge channel of said at least three coolant discharge channels has such an orientation in the tool body that a first radial plane that contains the centre axis of the tool body and goes through said imaginary intersection point associated with the centre axis of the coolant discharge channel forms an angle of 10-40°, preferably 15-35°, with a second radial plane that contains the centre axis of the tool body and goes through said axially foremost point of the cutting edge on the cutting insert associated with the coolant discharge channel. When said angle is smaller than 10°, unintentional supply of coolant onto the peripheral surface of the cutting insert during its non-cutting phase may increase due to the coolant hitting the workpiece fixture and bouncing back. This may lead to a decrease of the positive effect associated with a supply of coolant onto the peripheral surface of the cutting insert in its cutting phase. When said angle is larger than 40°, the amount of coolant reaching the peripheral surface of the cutting insert during its cutting phase decreases. Hence, improved effect is observed in a large variety of applications when said angle is 10-40° and for the same reasons this effect is further improved when said angle is 15-35°. This is especially observed when the distance between the centre axis of the tool body and said axially foremost point of the cutting edge on each cutting insert of said at least three cutting inserts is 16-62.5 mm, and even more pronounced when said distance is 20-40 mm.

According to another embodiment of the invention, each coolant discharge channel of said at least three coolant discharge channels is circular cylindrical, preferably with a diameter of 1-3 mm, more preferably 1.5-2.5 mm. In this case, each coolant discharge channel is preferably formed as a bore in the tool body, to thereby facilitate the manufacturing of the tool body.

According to another embodiment of the invention, the outlet opening of each coolant discharge channel of said at least three coolant discharge channels is completely surrounded by said axially forwardly facing external surface on the associated partition structure. Thanks to this, the coolant more successfully reaches the peripheral side of the cutting insert during its cutting phase. Since the outlet is surrounded by said axially forwardly facing external surface, the coolant cannot escape in an undesirable direction.

The distance between the centre axis of the tool body and said axially foremost point of the cutting edge on each cutting insert of said at least three cutting inserts is suitably 16-62.5 mm, preferably 20-40 mm. Improved effect is seen when said distance is 16-62.5 mm, and further improvement is seen when said distance is 20-40 mm.

The diameter of the cutting edge on each cutting insert of said at least three cutting inserts is suitably 8-22 mm, preferably 10-20 mm.

The insert pockets are preferably equally, or at least substantially equally, distributed about the centre axis of the tool body. It has been observed that an equal distribution of the insert pockets about the centre axis of the tool body implies that the useful life of the cutting inserts in a milling tool is more even among the cutting inserts during use of the milling tool because the coolant discharge channels are and can then be positioned more equally in relation to the axially forwardly facing external surfaces on the partition structures and the cutting inserts. Furthermore, the outlets of the coolant discharge channels will be positioned more equally on the axially forwardly facing external surfaces on the partition structures. This results in the peripheral surface of each cutting insert being more equally cooled during both the cutting and non-cutting phase.

According to another embodiment of the invention, the milling tool comprises at least three intermediate coolant channels provided inside the tool body and configured to convey coolant from the coolant supply recess to a respective coolant discharge channel of said at least three coolant discharge channels, wherein each coolant discharge channel of said at least three coolant discharge channels has an upstream end that opens into the associated intermediate coolant channel. In this case, each intermediate coolant channel is preferably formed as a bore in the tool body, to thereby facilitate the manufacturing of the tool body. Thanks to this, an improved effect is obtained because a more optimal choice of the parameters related to the arrangement of the coolant discharge channels can be done.

Further advantageous features of the milling tool according to the present invention will appear from the description following below.

### BRIEF DESCRIPTION OF THE DRAWINGS

With reference to the appended drawings, a specific description of embodiments of the invention cited as examples follows below. In the drawings:
- Fig 1: is a partly exploded perspective view of a milling tool according to a first embodiment of the present invention,
- Fig 2: is a perspective view from another direction of the milling tool of Fig 1,
- Fig 3: is a lateral view of the milling tool of Fig 1, with internal coolant channels illustrated in broken lines,
- Fig 4: is a plan view from below of the milling tool of Fig 1, with internal coolant channels illustrated in broken lines,
- Fig 5: is a plan view corresponding to Fig 4,
- Fig 6a: is a detail enlargement according to the rectangle VI in Fig 5,
- Fig 6b: is a detail enlargement corresponding to Fig 6a, with a part of a predefined imaginary surface schematically marked,
- Fig 7: is a plan view corresponding to Fig 4, with the predefined imaginary surface schematically marked,
- Fig 8: is a lateral view corresponding to Fig 3, with the predefined imaginary surface schematically marked,
- Fig 9: is a cut according to the line IX-IX in Fig 5, with the cutting inserts of the milling tool omitted,
- Fig 10: is a schematic illustration of a coolant supply recess and coolant discharge channels included in the tool body of the milling tool of Fig 1,
- Fig 11: is a schematic illustration of a projection of a centre line of one of the coolant discharge channels in a given radial plane,
- Fig 12: is a partly exploded perspective view of a milling tool according to a second embodiment of the invention,
- Fig 13: is a perspective view from another direction of the milling tool of Fig 12,
- Fig 14: is a plan view from below of the milling tool of Fig 12, with internal coolant channels illustrated in broken lines,
- Fig 15: is a plan view corresponding to Fig 14, with a predefined imaginary surface schematically marked,
- Fig 16: is a lateral view of the milling tool of Fig 12, with internal coolant channels illustrated in broken lines and with the predefined imaginary surface schematically marked,
- Fig 17: is a schematic illustration of the coolant channels included in the tool body of the milling tool of Fig 12,
- Fig 18: is a cut according to the line XVIII-XVIII in Fig 14, with the cutting inserts of the milling tool omitted,
- Fig 19: is a plan view from below of a milling tool according to a third embodiment of the invention, with internal coolant channels illustrated in broken lines,
- Fig 20: is a perspective view of a cutting insert included in the milling tools of Figs 1-19,
- Fig 21: is a lateral view of the cutting insert of Fig 20,
- Fig 22: is a plan view from below of the cutting insert of Fig 20, and
- Fig 23: is a cut according to the line XXIII-XXIII in Fig 22.

### DETAILED DESCRIPTION OF EMBODIMENTS OF THE INVENTION

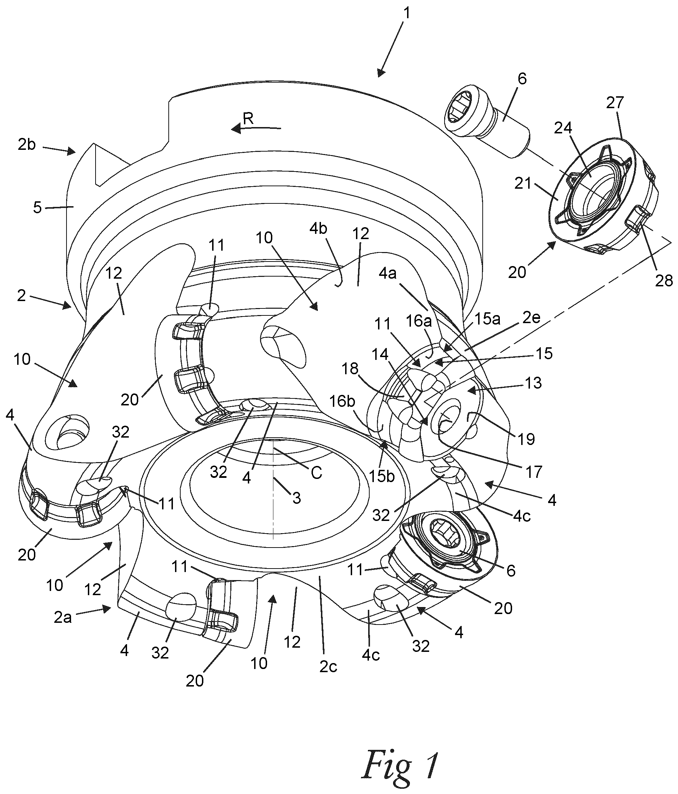

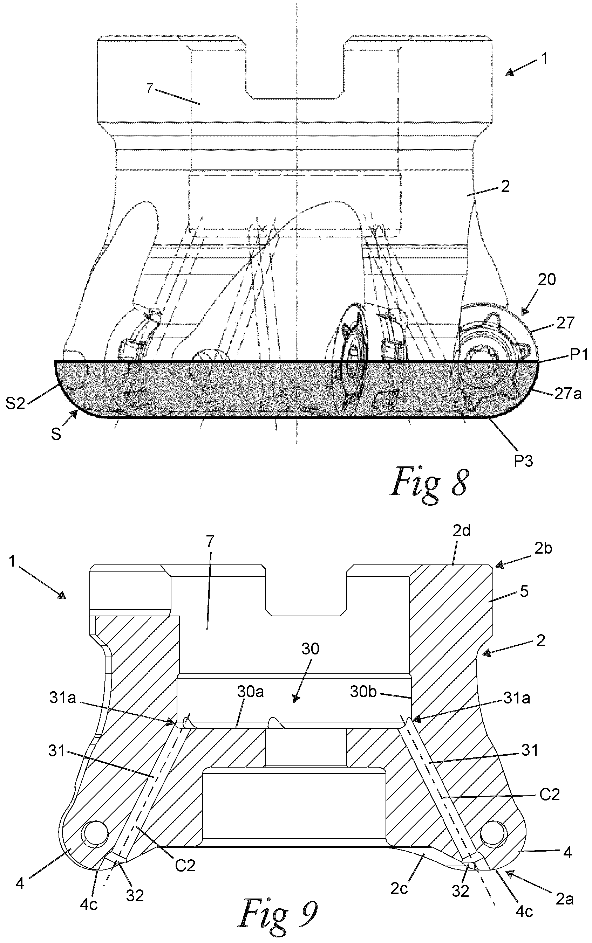

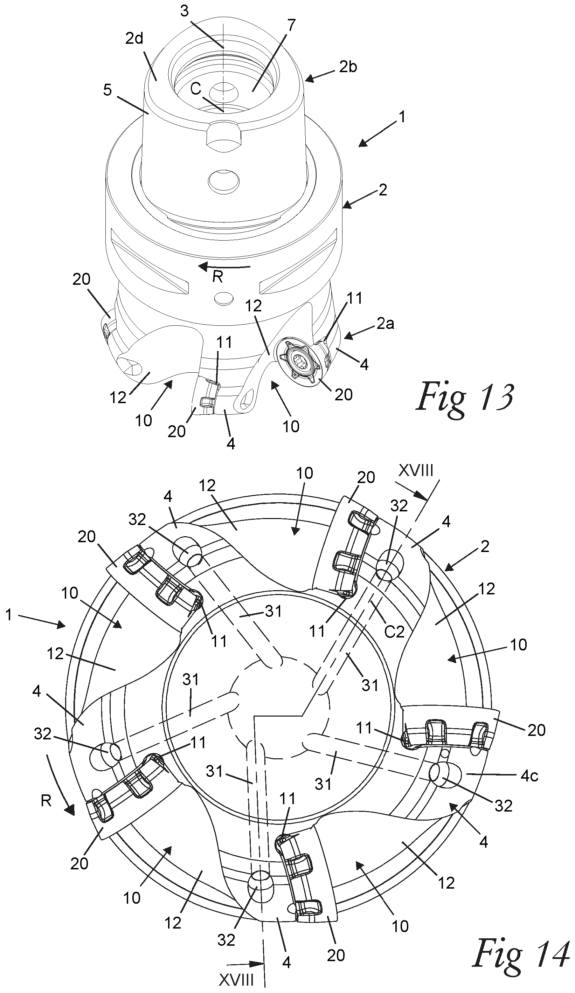

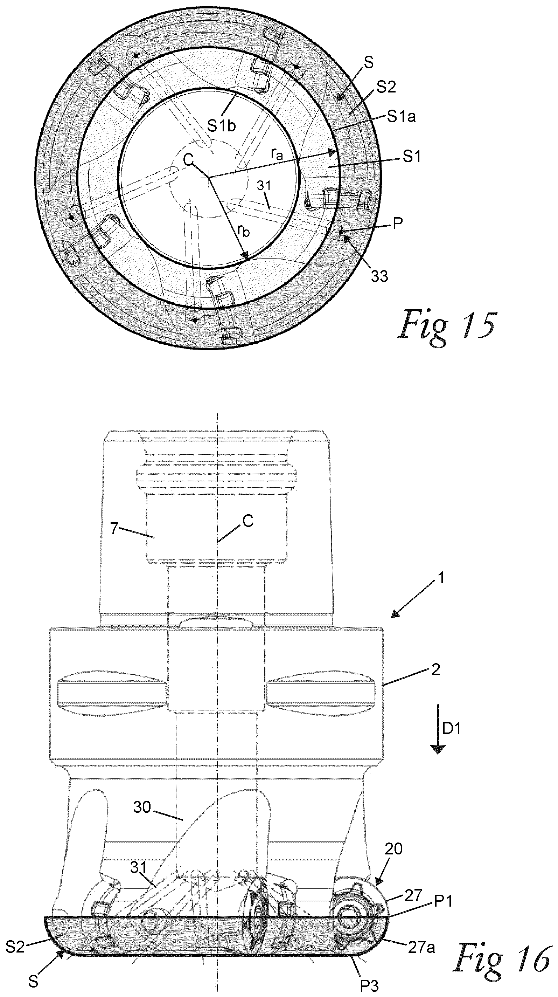

Three different embodiments of a milling tool 1 according to the present invention are illustrated in Figs 1-10, Figs 12-18 and Fig 19. In the illustrated embodiments, the milling tool 1 has the design of a milling tool in the form of a face milling cutter.

The milling tool 1 comprises a tool body 2 and is configured to be rotated about an axis of rotation 3. The tool body 2 has a front end 2a and an opposite rear end 2b. A longitudinal centre axis C of the tool body 2 extends between the rear end 2b and the front end 2a of the tool body, wherein this centre axis C coincides with the axis of rotation 3 of the milling tool 1. A rear part of the tool body 2 forms a connection member 5, through which the tool body 2 is mountable, directly or via an intermediate tool holder, to a rotating spindle or the similar of a machine, for instance a milling machine. The tool body 2 has an axially forwardly facing front face 2c at its front end 2a and an axially rearwardly facing rear face 2d at its rear end. The tool body 2 also has a peripheral surface 2e that adjoins to the front face 2c and extends from the front face 2c towards the rear end 2b of the tool body.

Several insert pockets 10 are provided in the tool body 2 and distributed in a circumferential direction of the tool body 2. These insert pockets 10 are preferably equally, or at least substantially equally, distributed about the centre axis C of the tool body 2. Each insert pocket 10 comprises an insert seat 11, which is configured to receive a cutting insert 20, and a chip clearance space 12 associated with the insert seat 11 and located adjacent to it. The chip clearance space 12 is provided in the tool body 2 in front of the associated insert seat 11 as seen in the intended direction of rotation R of the tool body 2. In the illustrated embodiments, each chip clearance space 12 has the form of a so-called chip pocket. Each cutting insert 20 is indexable and configured to be detachably mounted in its associated insert seat 11.

In the illustrated embodiments, the tool body 2 is provided with five insert pockets 10 spaced apart in the circumferential direction of the tool body. However, the tool body 2 may as an alternative, inter alia depending on the diameter of the tool body, be provided with any other suitable number of insert pockets 10, as long as they are at least three in number.

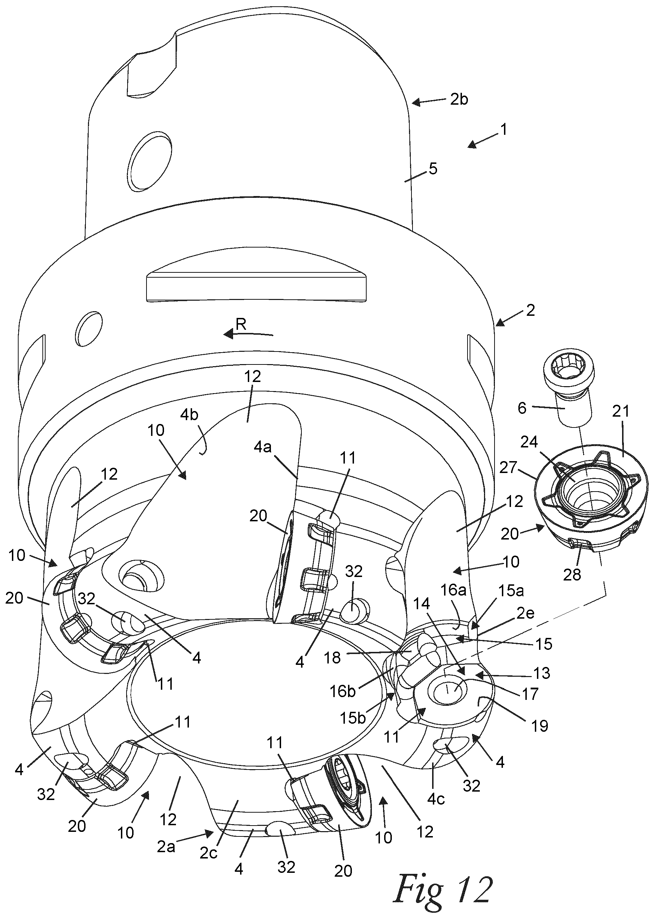

Each insert pocket 10 is provided in the tool body 2 at a transition between the front face 2c and the peripheral surface 2e of the tool body and comprises a space 13 (see Figs 1 and 12) configured to accommodate a releasably mounted cutting insert 20, wherein this space 13 is open towards the front face 2c of the tool body in order to allow said cutting insert 20, when mounted in the insert seat 11, to project in the axial direction of the tool body 2 beyond the front end 2a thereof and also open towards the peripheral surface 2e of the tool body in order to allow said cutting insert 20, when mounted in the insert seat 11, to project in the radial direction of the tool body 2 beyond the peripheral surface 2e thereof.

Each insert seat 11 comprises a substantially tangentially facing bottom wall 14, a substantially tangentially facing top opening opposite to the bottom wall 14 and an internal wall 15 provided between the bottom wall 14 and the top opening. The top opening is facing the clearance space 12 provided in front of the insert seat 11. The internal wall 15 extends transversely to the bottom wall 14 and delimits the cutting insert accommodating space 13 together with the bottom wall 14. The internal wall 15 has a first end 15a, through which the internal wall 15 adjoins to the peripheral surface 2e of the tool body 2, and a second end 15b, through which the internal wall 15 adjoins to the front face 2c of the tool body 2. The insert seat 11 is configured to receive a cutting insert 20 with a round basic shape, wherein the internal wall 15 extends in a curved path from its first end 15a to its second end 15b.

Each two consecutive insert pockets 10 in the tool body 2 are separated from each other in the circumferential direction of the tool body 2 by a partition structure 4 formed in the tool body. Thus, each individual partition structure 4 constitutes a part of the tool body 2 located between two consecutive insert pockets 10, and the number of partition structures 4 in the tool body 2 corresponds to the number of insert pockets 10. The partition structures 4 form part of the tool body 2 and are preferably formed in one piece with the other parts of the tool body 2. Each partition structure 4 has a leading face 4a that is facing forward in the intended direction of rotation R of the tool body 2 and an opposite trailing face 4b that is facing rearward in the intended direction of rotation R of the tool body 2. Each partition structure 4 also has an axially forwardly facing external surface 4c, which is located between the leading and trailing faces 4a, 4b of the partition structure 4 and which forms part of the front face 2c of the tool body 2. The insert seat 11 of each insert pocket 10 is provided in the leading face 4a of the partition structure 4 located directly behind the insert pocket 10 as seen in the intended direction of rotation R of the tool body 2.

In the illustrated embodiments, each insert seat 11 is so designed that a cutting insert 20 is given a positive axial tipping-in angle and a negative radial tipping-in angle when mounted in the insert seat 11 in any of its working positions.

The insert seats 11 are arranged in level with each other as seen in the axial direction of the tool body 2, such that an axially foremost point P3 of each individual cutting insert 20, as seen in a reference direction D1 from the rear end 2b of the tool body 2 towards the front end 2a of the tool body in parallel with the centre axis C of the tool body, is located in level with the axially foremost point P3 of each one of the other cutting inserts 20, within manufacturing tolerances, when the cutting inserts 20 are mounted in the insert seats 11.

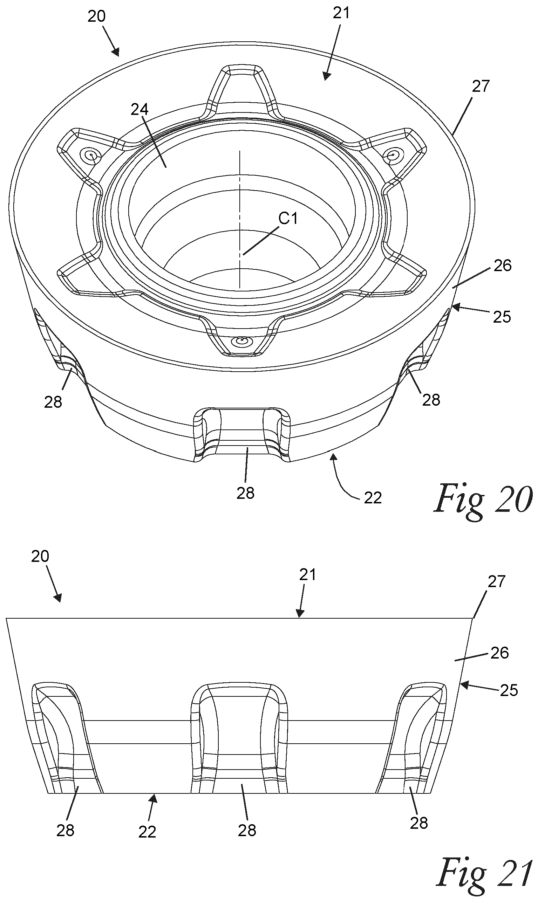

The cutting inserts 20 are all geometrically identical to each other, within manufacturing tolerances. Thus, the cutting inserts 20 have the same shape. The cutting inserts 20 illustrated in Figs 1-8, 12-16 and 19 are of the design illustrated in closer detail in Figs 20-23.

Each one of the cutting inserts 20 comprises a rake face 21 and an abutment face 22 arranged opposite to each other on opposite sides of the cutting insert 20 and serving as top and bottom faces of the cutting insert. The rake face 21 and the abutment face 22 are configured to serve as a leading face and a trailing face, respectively, of the cutting insert 20 when the cutting insert is mounted in the associated insert seat 11 and as seen in an intended direction of rotation R of the tool body 2. Thus, when mounted in the associated insert seat 11 in the tool body 2, the cutting insert 20 is configured to be mounted in the insert seat 11 with the rake face 21 facing forward in the intended direction of rotation R of the tool body 2 and with the abutment face 22 facing rearward as seen in the intended direction of rotation R of the tool body. The cutting insert 20 has a round basic shape and is rotatable into different working positions. Thus, the cutting insert 20 may be mounted in different rotary positions, i.e. different indexing position, in the associated insert seat 11.

When mounted in the associated insert seat 11, the cutting insert 20 is configured to abut against a planar tangential support surface 19 on the bottom wall 14 in the insert seat through a planar surface 23 on the abutment face 22. The cutting insert 20 has a centre axis C1, which extends between the rake face 21 and the abutment face 22. A peripheral surface 25, which constitutes the relief surface of the cutting insert 20, extends around the cutting insert between the rake face 21 and the abutment face 22. When mounted in the associated insert seat 11, the cutting insert 20 is configured to abut against one or more curved side support surfaces 16a, 16b on the internal wall 15 of the above-mentioned space 13 in the insert seat 11 through one or more parts of an annular abutment surface 26, which extends around and is concentric with the centre axis C1 of the cutting insert 20 and which is included in the peripheral surface 25 of the cutting insert. In the illustrated embodiment, the annular abutment surface 26 is conical, but it could as an alternative be cylindrical.

In the illustrated embodiments, said one or more side support surfaces 16a, 16b on the internal wall 15 of the cutting insert accommodating space 13 in each insert seat 11 are two in number and consist of a substantially axially facing first side support surface 16a located at the first end 15a of the internal wall close to the peripheral surface 2e of the tool body 2, and a substantially radially facing second side support surface 16b located at the second end 15b of the internal wall close to the front face 2c of the tool body 2. The first and second side support surfaces 16a, 16b are curved to conform to the curved shape of the annular abutment surface 26 of the cutting inserts 20.

A circular cutting edge 27 extends around the centre axis C1 of the cutting insert 20 along the periphery of the rake face 21 and is formed at an intersection between the peripheral surface 25 and the rake face 21. The circular cutting edge 27 is concentric with the centre axis C1 of the cutting insert 20. When the cutting insert 20 is mounted in the associated insert seat 11 in any of its working positions, the circular cutting edge 27 has a radially outermost point P1 constituting the point on the cutting edge 27 located at the longest distance from the centre axis C of the tool body 2, a radially innermost point P2 constituting the point on the cutting edge 27 located at the shortest distance from the centre axis C of the tool body 2 and an axially foremost point P3 constituting the foremost point on the cutting edge 27 as seen in the above-mentioned reference direction D1. Said radially outermost point P1 on the cutting edge 27 also constitutes the point of the cutting insert 20 located at the longest distance from the centre axis C of the tool body 2, and said axially foremost point P3 on the cutting edge 27 also constitutes the foremost point of the cutting insert 20 as seen in the reference direction D1. In each one of the different working positions of the cutting insert 20 in the associated insert seat 11, a part of the section of the circular cutting edge 27 located between the axially foremost point P3 on the cutting edge and the radially outermost point P1 on the cutting edge is configured to operate as a primary cutting edge of the cutting insert 20, and a small section at the axially foremost point P3 on the cutting edge 27 is configured to operate as a secondary cutting edge of the cutting insert 20.

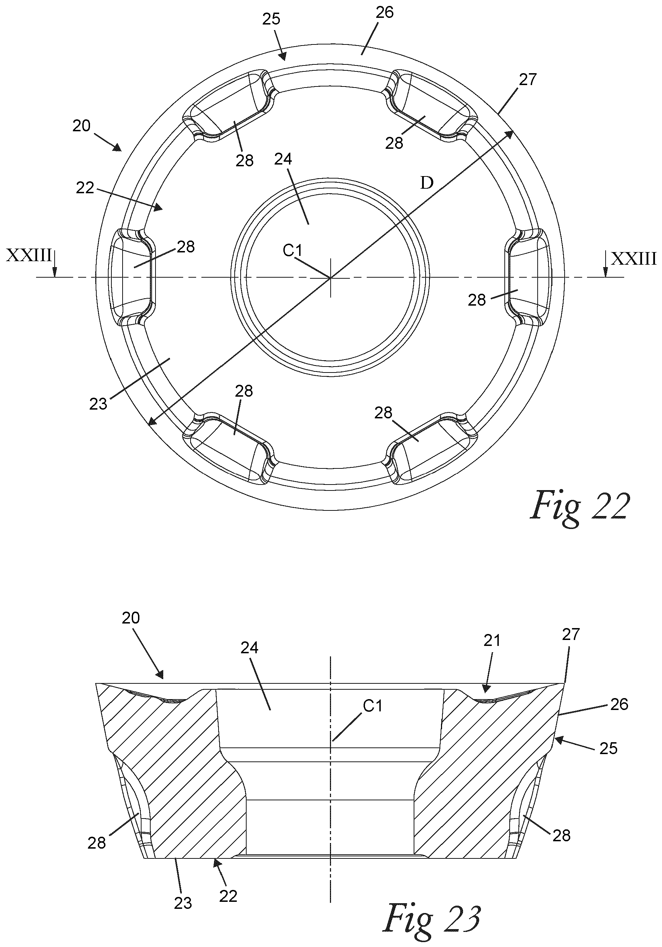

The distance between the centre axis C of the tool body 2 and said axially foremost point P3 of the cutting edge 27 on each cutting insert 20 is suitably 16-62.5 mm, preferably 20-40 mm. Furthermore, the diameter D (see Fig 22) of the cutting edge 27 on each cutting insert 20 is suitably 8-22 mm, preferably 10-20 mm.

In the illustrated embodiments, each cutting insert 20 has a through hole 24, which extends centrally through the cutting insert 20 between the rake face 21 and the abutment face 22. The centre axis C1 of the cutting insert 20 coincides with the centre axis of the through hole 24. The through hole 24 in the cutting insert 20 is configured to receive a fastening element 6 in the form of a screw, by means of which the cutting insert 20 may be releasably fixed in the associated insert seat 11 in the tool body 2. The fastening element 6 is configured to extend through the through hole 24 in the cutting insert 20 and to be in threaded engagement with a screw hole 17 provided in the bottom wall 14 of the insert seat 11.

In the illustrated embodiments, each cutting insert 20 comprises several anti-rotation pockets 28, which are provided in the peripheral surface 25 of the cutting insert and distributed about the centre axis C1 of the cutting insert 20. The anti-rotation pockets 20 are configured to receive a part of a protrusion 18 (see Figs 1 and 12) on the internal wall 15 of the associated insert seat 11 in a respective one of the different working positions of the cutting insert 20 in the associated insert seat 11. The protrusion 18 is configured to come into stopping contact with an internal rotation-preventing surface in one of the anti-rotation pockets 28 when the cutting insert 20 is subjected to a rotation in the insert seat 11 in any direction about its centre axis C1. In the illustrated embodiments, the protrusion 18 is located between the first and second side support surfaces 16a, 16b of the insert seat 11, as seen in a direction in the cutting insert accommodating space 13 in the insert seat corresponding to a circumferential direction of the peripheral surface 25 of the cutting insert 20 when mounted in the insert seat 11 in any of its working positions. The anti-rotation pockets 28 of a cutting insert 20 are configured to receive the protrusion 18 of the associated insert seat 11 with a small play in a respective one of the different working positions of the cutting insert 20 when the cutting insert is mounted in the insert seat 11. By its engagement in one of the anti-rotation pockets 28 in the peripheral surface 25 of the cutting insert 20, the protrusion 18 will prevent the cutting insert 20 from rotating in the insert seat 11 out of its prevailing working position when the cutting insert 20 is subjected to high cutting forces during machining that tend to rotate the cutting insert 20 in the insert seat 11. Thus, the anti-rotation pockets 28 of each cutting insert 20 and the protrusion 18 of the associated insert seat 11 jointly define the different working positions of the cutting insert 20 in the associated insert seat 11 and jointly prevent the cutting insert 20 from rotating in the associated insert seat 11 out of its prevailing working position.

The anti-rotation pockets 20 included in the peripheral surface 25 of the cutting insert 20 are preferably 4-8 in number, and are preferably equally distributed about the centre axis C1 of the cutting insert 20, i.e. spaced at equal angular intervals around the circumference of the peripheral surface 25 of the cutting insert 1. In the illustrated embodiments, the cutting insert 20 is provided with six anti-rotation pockets 28 equally distributed about the centre axis C1 of the cutting insert 20.

Each cutting insert 20 preferably has 360°/n rotational symmetry about the centre axis C1 of the cutting insert, wherein n is an integer corresponding to the number of anti-rotation pockets 28 included in the peripheral surface 25 of the cutting insert 20. In the illustrated embodiments with six anti-rotation pockets 28, the cutting insert 20 has 60° rotational symmetry about its centre axis C1.

The different working positions, or indexing positions, of each cutting insert 20 included in the milling tool 1 of the present invention may as an alternative be defined by several planar indexing surfaces included in the peripheral surface 25 of the cutting insert and distributed about the centre axis C1 of the cutting insert, as illustrated in US 6 053 671 A and US 9 095 909 B2. In each working position of the cutting insert 20 in an associated insert seat 11, at least one of said indexing surfaces is positioned closely in front of a corresponding planar surface on the internal wall 15 of the insert seat 11. By its cooperation with the indexing surfaces on the cutting insert, said planar surface on the internal wall of the insert seat assists in defining the different working positions of the cutting insert in the insert seat and also prevents the cutting insert from rotating in the insert seat out of its prevailing working position when the cutting insert is subjected to high cutting forces during machining that tend to rotate the cutting insert in the insert seat.

The cutting inserts 20 are made of hard and wear-resistant material, preferably cemented carbide, and the tool body 2 is preferably made of steel.

A coolant supply recess 30 is provided inside the tool body 2 and configured to extend at least partly around the centre axis C of the tool body. The coolant supply recess 30 is arranged in a central bore 7 in the tool body 2 that opens into the rear face 2d of the tool body.

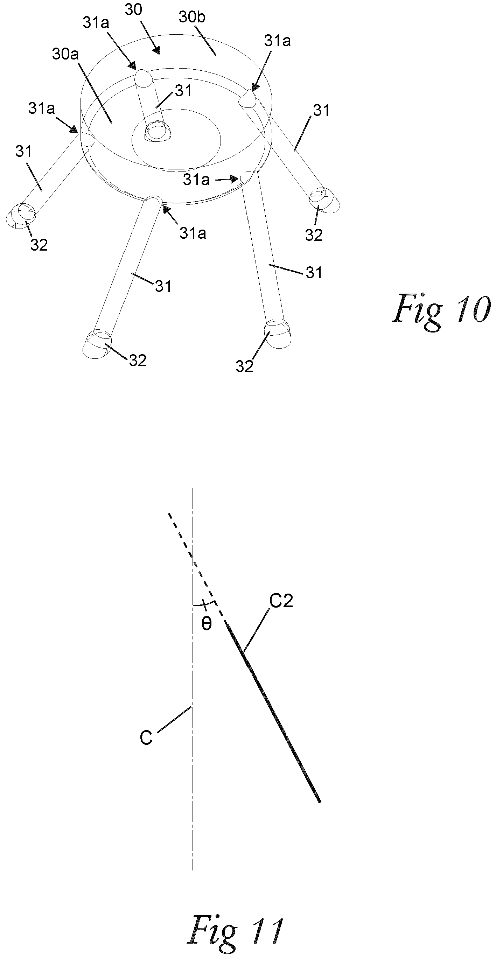

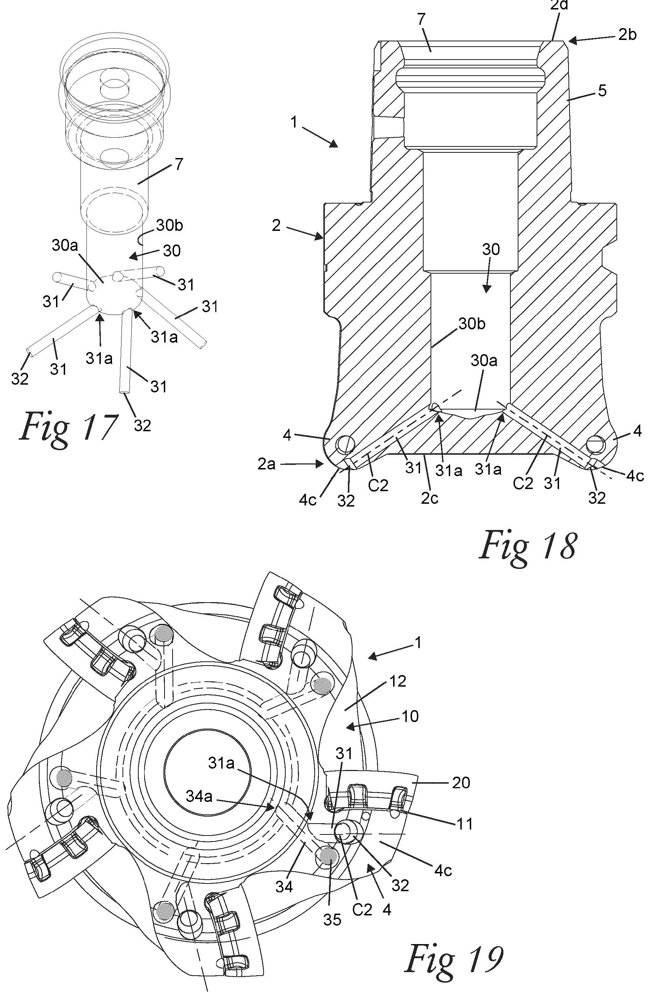

A system of coolant channels is arranged in the tool body 2 in order to allow coolant to be conveyed from the coolant supply recess 30 and ejected from the tool body 2 as jets of coolant for cooling of the cutting inserts 20 during machining of a workpiece. In order to clearly visualize the different coolant channels included in the tool body 2, the interface between the coolant supply recess 30 and the tool body 2 as well as the interface between each coolant channel and the tool body 2 are illustrated in Figs 10 and 17.

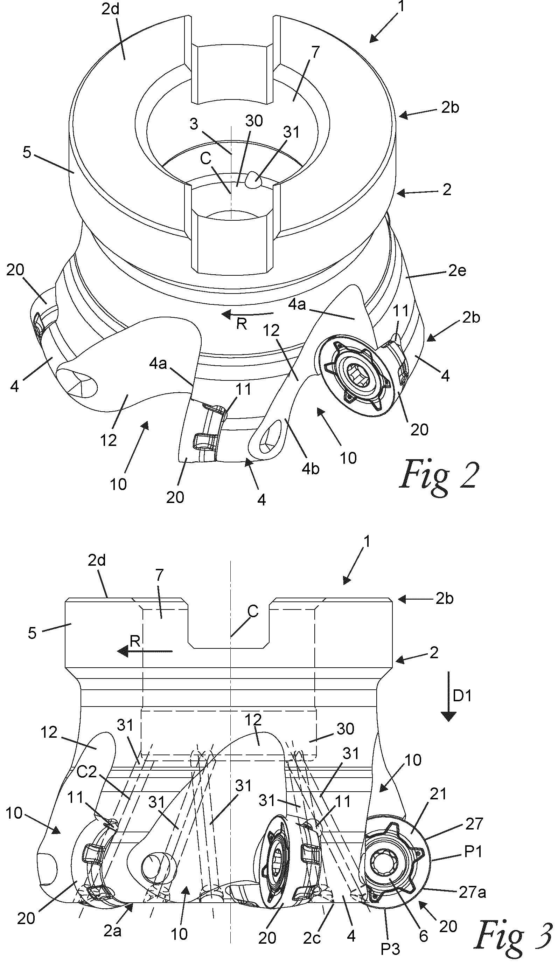

The coolant supply recess 30 and the different coolant channels included in the system of coolant channels in the tool body 2 are illustrated with broken lines in Figs 3-8, 14-16 and 19.

The above-mentioned system of coolant channels in the tool body 2 comprises several coolant discharge channels 31 provided inside the tool body 2 and associated to a respective one of the cutting inserts 20 of the milling tool, wherein each one of these coolant discharge channels 31 is in fluid communication with the coolant supply recess 30 in order to receive coolant from the coolant supply recess 30. Each coolant discharge channel 31 opens into the axially forwardly facing external surface 4c on the partition structure 4 in which the insert seat 11 of the associated cutting insert 20 is mounted, wherein the coolant discharge channel 31 opens into this surface 4c at a position between the insert seat 11 of the associated cutting insert 20 and the insert pocket 12 located directly behind the partition structure 4 in question as seen in the intended direction of rotation R of the tool body 2. Thus, each coolant discharge channel 31 has an outlet opening 32 that is located in the axially forwardly facing external surface 4c on the partition structure 4 in which the insert seat 11 of the associated cutting insert 20 is mounted. Preferably, at least a part of the outlet opening 32 of each coolant discharge channel 31, and more preferably the centre thereof, is located at a distance from the centre axis C of the tool body 2 that is larger than the distance between the centre axis of the tool body 2 and said radially innermost point P2 of the cutting edge 27 on the cutting insert 20 associated with the coolant discharge channel 31. In the illustrated embodiments, the entire outlet opening 32 of each coolant discharge channel 31 is located at a distance from the centre axis C of the tool body 2 that is larger than the distance between the centre axis of the tool body 2 and the radially innermost point P2 of the cutting edge 27 on the cutting insert 20 associated with the coolant discharge channel 31. Furthermore, the entire outlet opening 32 of each coolant discharge channel 31 is preferably located at a distance from the centre axis C of the tool body 2 that is smaller than the distance between the centre axis of the tool body 2 and said radially outermost point P1 of the cutting edge 27 on the cutting insert 20 associated with the coolant discharge channel 31.

In the illustrated embodiments, the outlet opening 32 of each coolant discharge channel 31 is completely surrounded by said axially forwardly facing external surface 4c on the associated partition structure 4.

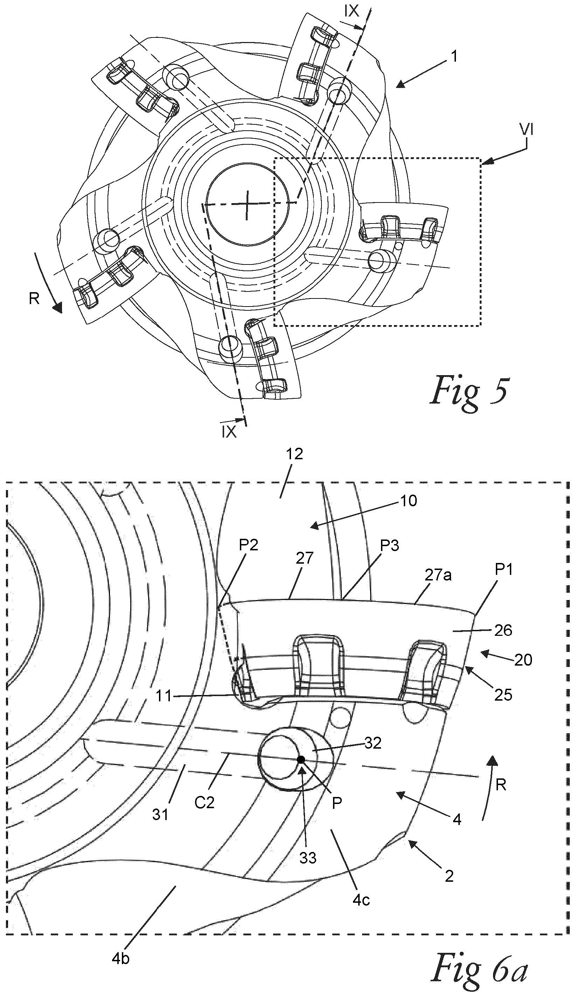

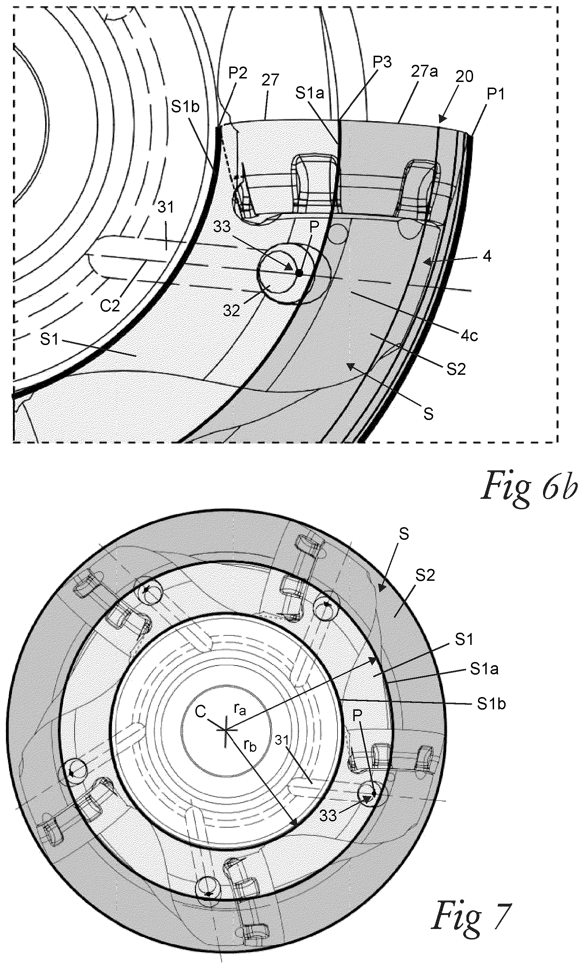

Each coolant discharge channel 31 is configured to eject a jet of coolant obliquely outwards in relation to the centre axis C of the tool body 2 and obliquely forwards in the intended direction of rotation R of the tool body 2 in such a direction that the jet of coolant is configured to hit a predefined imaginary surface S (see Figs 6b, 7, 8, 15 and 16) in a target area 33 located at a distance from and behind the cutting insert 20 associated with the coolant discharge channel 31, as seen in the intended direction of rotation R of the tool body, i.e. at a distance from and behind the insert seat 11 provided in the partition structure 4 in which the coolant discharge channel 31 has its outlet opening. Said predefined imaginary surface S consists of a planar and annular first imaginary sub surface S1 centred about the centre axis C of the tool body 2 and an adjacent second imaginary sub surface S2 located radially outwardly of the first imaginary sub surface S1. The first imaginary sub surface S1 has its extension in a plane that is perpendicular to the centre axis C of the tool body 2 and has a circular outer periphery S1a that touches the axially foremost point P3 of the cutting edge 27 on the cutting insert 20 associated with the coolant discharge channel 31. Thus, the radius rₐ of the outer periphery S1a corresponds to the distance between the centre axis C of the tool body 2 and the radially foremost point P3 of the cutting edge 27 on said cutting insert 20. Furthermore, the first imaginary sub surface S1 has a circular inner periphery S1b with a radius r_{b} corresponding to the distance between the centre axis C of the tool body 2 and the radially innermost point P2 of the cutting edge 27 on the cutting insert 20 associated with the coolant discharge channel 31. The second imaginary sub surface S2 constitutes an annular surface of revolution generated by rotating a section 27a of the cutting edge 27 on said cutting insert 20 around the centre axis C of the tool body 2, wherein this section 27a of the cutting edge is the section extending the shortest way along the cutting edge 27 from the radially outermost point P1 of the cutting edge 27 to the axially foremost point P3 of the cutting edge 27.

In the embodiment illustrated in Figs 1-11, said target area 33 is provided on the first imaginary sub surface S1 of the predefined imaginary surface S. In the embodiment illustrated in Figs 12-18, said target area 33 is provided on the second imaginary sub surface S2 of the predefined imaginary surface S.

By being directed onto a target area 33 located at a distance from and behind the cutting insert 20 associated with a coolant discharge channel 31, the jet of coolant ejected from a coolant discharge channel 31 is prevented from directly striking the cutting insert 20 associated with the coolant discharge channel 31. On the contrary, the jet of coolant ejected from a coolant discharge channel 31 during machining of a workpiece will strike the workpiece closely behind the associated cutting insert 20, wherein coolant from the jet of coolant will splash from the surface of the workpiece onto the peripheral surface 25 of the cutting insert 20. The amount of coolant splashing from the workpiece onto the peripheral surface 25 of the cutting insert 20 will be substantially greater each time the cutting insert is in the aforementioned cutting phase compared to when it is in the non-cutting phase.

Each cutting insert 20 of the milling tool 1 is associated with its own dedicated coolant discharge channel 31. Thus, the number of coolant discharge channels 31 in the tool body 2 corresponds to the number of cutting inserts 20 of the milling tool 1 and thereby also to the number of insert pockets 11 in the tool body 2.

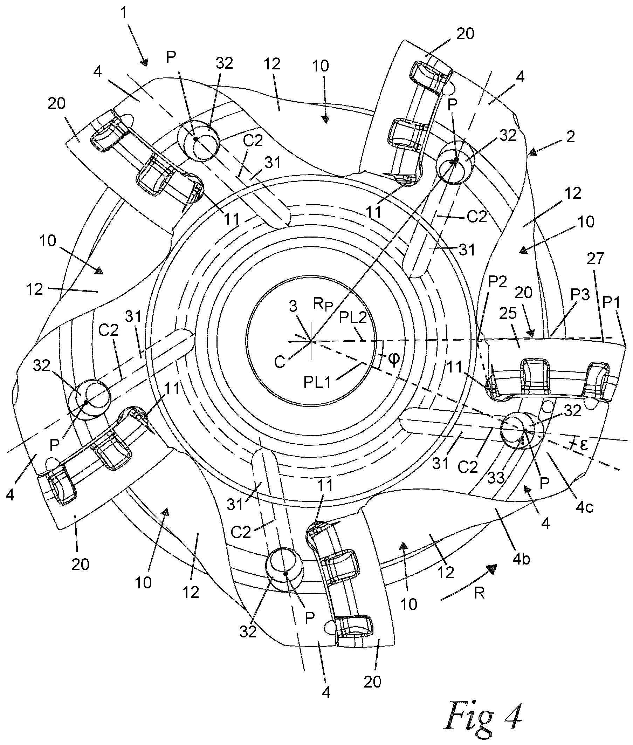

In the illustrated embodiments, each coolant discharge channel 31 is rectilinear and has a longitudinal centre axis C2, which intersects said predefined imaginary surface S in an imaginary intersection point P, wherein the coolant discharge channel 31 has an outlet opening 32 provided in the axially forwardly facing external surface 4c on the associated partition structure 4 and formed by an open downstream end of the coolant discharge channel 31. In this case, each coolant discharge channel 31 is configured to eject a jet of coolant from its outlet opening 32 in a direction substantially co-axial with its centre axis C2. Said imaginary intersection point P is marked with a dot in Figs 4, 6a, 6b, 7 and 15 and is located in the above-mentioned target area 33 that is associated with the jet of coolant ejected from the coolant discharge channel 31. In this case, each coolant discharge channel 31 preferably has such an orientation in the tool body 2 that a projection of its centre axis C2 in a first radial plane PL1 (see Fig 4) that contains the centre axis C of the tool body 2 and goes through said imaginary intersection point P associated with the centre axis C2 of the coolant discharge channel 31 forms an angle θ (see Fig 11) of 10-80°, preferably 15-70°, more preferably 20-65°, with the centre axis C of the tool body 2. This angle θ is approximately 28° in the embodiment illustrated in Figs 1-11 and approximately 57° in the embodiment illustrated in Figs 12-18.

Each coolant discharge channel 31 has such an orientation in the tool body 2 that said imaginary intersection point P associated with the centre axis C2 of the coolant discharge channel 31 is located at a distance R_{P} (see Fig 4) from the centre axis C of the tool body 2 fulfilling the following condition:
R₂<R_{P}<R₁, preferably R₂<R_{P}≤R₁-(R₁-R₃)/2, more preferably R₂+(R₃-R₂)/2≤R_{P}≤R₁-(R₁-R₃)/2, where:
- R_{P} is the distance between the centre axis C of the tool body 2 and the imaginary intersection point P,
- R₁ is the distance between the centre axis C of the tool body 2 and said radially outermost point P1 of the cutting edge 27 on the cutting insert 20 associated with the coolant discharge channel 31,
- R₂ is the distance between the centre axis of the tool body 2 and said radially innermost point P2 of the cutting edge 27 on the cutting insert 20 associated with the coolant discharge channel 31, and
- R₃ is the distance between the centre axis of the tool body 2 and said axially foremost point P3 of the cutting edge 27 on the cutting insert 20 associated with the coolant discharge channel 31.

When the coolant discharge channels 31 are rectilinear, each coolant discharge channel 31 preferably has such an orientation in the tool body 2 that an extension of its centre axis C2 beyond the associated imaginary intersection point P extends in front of the first radial plane PL1 that contains the centre axis C of the tool body 2 and goes through this imaginary intersection point P, as seen in the intended direction of rotation R of the tool body 2, wherein a projection of the centre axis C2 of the coolant discharge channel 31 in a reference plane that is perpendicular to the centre axis C of the tool body 2 forms an angle ε (see Fig 4) of 5-35°, preferably 5-25°, more preferably 10-20°, with a line of intersection between this reference plane and said first radial plane PL1. This angle ε is approximately 17° in the embodiment illustrated in Figs 1-11 and approximately 8° in the embodiment illustrated in Figs 12-18.

Furthermore, when the coolant discharge channels 31 are rectilinear, each coolant discharge channel 31 preferably has such an orientation in the tool body 2 that the first radial plane PL1 that contains the centre axis C of the tool body 2 and goes through said imaginary intersection point P associated with the centre axis C2 of the coolant discharge channel 31 forms an angle φ (see Fig 4) of 10-40°, preferably 15-35°, with a second radial plane PL2 that contains the centre axis C of the tool body 2 and goes through the axially foremost point P3 of the cutting edge 27 on the cutting insert 20 associated with the coolant discharge channel 31. This angle φ is approximately 23° in the embodiment illustrated in Figs 1-11 and approximately 22° in the embodiment illustrated in Figs 12-18.

In the illustrated embodiments, the coolant discharge channels 31 are circular cylindrical and formed as a respective bore in the tool body 2. In this case, each coolant discharge channel 31 suitably has a diameter of 1-3 mm, preferably 1.5-2.5 mm.

In the embodiments illustrated in Figs 1-11 and 12-18, each coolant discharge channel 31 is directly connected to the coolant supply recess 30 at an upstream end 31a of the coolant discharge channel 31. Thus, in this case, each coolant discharge channel 31 has an upstream end 31a that opens into the coolant supply recess 30. However, each coolant discharge channel 31 may as an alternative be connected to the coolant supply recess 30 via one or more intermediate coolant channels provided inside the tool body 2. In the embodiment illustrated in Fig 19, the coolant discharge channels 31 are connected to and in fluid communication with the coolant supply recess 30 via a respective intermediate coolant channel 34 provided inside the tool body 2, wherein each intermediate coolant channel 34 is configured to convey coolant from the coolant supply recess 30 to the associated coolant discharge channel 31. In the latter case, each coolant discharge channel 31 has an upstream end 31a that opens into the associated intermediate coolant channel 34, wherein each intermediate coolant channel 34 in its turn has an upstream end 34a that opens into the coolant supply recess 30. In the embodiment illustrated in Fig 19, each intermediate coolant channel 34 is formed as a bore in the tool body 2, wherein the downstream end of the bore is closed by means of an end plug 35 that is fixed to the tool body 2, for instance via a threaded connection.

In the embodiments illustrated in Figs 1-11 and Figs 12-18, the coolant supply recess 30 has a bottom surface 30a that faces the rear end 2b of the tool body 2 and that extends around the centre axis C of the tool body, and an inner peripheral wall 30b that extends from said bottom surface 30a in a direction towards the rear end 2b of the tool body and that surrounds the centre axis C of the tool body, wherein the upstream end 31a of each coolant discharge channel 31 opens into the coolant supply recess 30 at a transition between the bottom surface 30a and the inner peripheral wall 30b. In the embodiment illustrated in Figs 1-11, the bottom surface 30a of the coolant supply recess 30 is annular, wherein a fastening element in the form of a screw is configured to extend across the opening in the centre of the bottom surface 30a when the tool body 2 is mounted to a tool holder in the manner described in US 2021/0220956 A1. In the embodiment illustrated in Figs 12-18, the bottom surface 30a is closed.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A milling tool comprising:
- a tool body (2) having a front end (2a) and an opposite rear end (2b), the rear end (2b) being configured for attachment to a machine, wherein a longitudinal centre axis (C) of the tool body extends between the rear end (2b) and the front end (2a) of the tool body, and wherein the tool body (2) has an axially rearwardly facing rear face (2d) at its rear end (2b);
- at least three insert pockets (10) provided in the tool body (2) and distributed in a circumferential direction of the tool body (2), wherein each one of these at least three insert pockets (10) comprises an insert seat (11) and a chip clearance space (12) associated with the insert seat (11) and located adjacent to it, and wherein each two consecutive insert pockets (10) of said at least three insert pockets are separated from each other in the circumferential direction of the tool body (2) by a partition structure (4) formed in the tool body, wherein the insert seat (11) of each insert pocket (10) is provided in the partition structure (4) located directly behind the insert pocket (10) as seen in the intended direction of rotation (R) of the tool body (2) and comprises a space (13) configured to accommodate a cutting insert (20), this space (13) being delimited by a tangentially facing bottom wall (14) and an internal wall (15) that extends transversely to the bottom wall (14);
- at least three cutting inserts (20), each of which being detachably mountable in different working positions in the insert seat (11) of a respective insert pocket (10) of said at least three insert pockets, wherein each cutting insert (20) of said at least three cutting inserts comprises:
• a rake face (21) and an abutment face (22) arranged on opposite sides of the cutting insert (20), the cutting insert (20) having a centre axis (C1) that extends between the rake face (21) and the abutment face (22), wherein the cutting insert (20), when mounted in the associated insert seat (11) in any of its working positions, is configured to abut against the bottom wall (14) of said space (13) in the insert seat (11) through the abutment face (22),
• a peripheral surface (25) extending around the cutting insert (20) between the rake face (21) and the abutment face (22), and
• a circular cutting edge (27) formed at an intersection between the peripheral surface (25) and the rake face (21) and extending around the centre axis (C1) of the cutting insert (20) along a periphery of the rake face (21), wherein the cutting edge (27), when the cutting insert (20) is mounted in the associated insert seat (11) in any of its working positions, has a radially outermost point (P1) constituting the point on the cutting edge (27) located at the longest distance from the centre axis (C) of the tool body (2), a radially innermost point (P2) constituting the point on the cutting edge (27) located at the shortest distance from the centre axis (C) of the tool body (2) and an axially foremost point (P3) constituting the foremost point on the cutting edge (27) as seen in a reference direction (D1) from the rear end (2b) of the tool body (2) towards the front end (2a) of the tool body in parallel with the centre axis (C) of the tool body;
- a coolant supply recess (30) provided inside the tool body (2) and configured to extend at least partly around the centre axis (C) of the tool body, wherein the coolant supply recess (30) is arranged in a central bore (7) in the tool body (2) that opens into the rear face (2d) of the tool body; and
- at least three coolant discharge channels (31) provided inside the tool body (2), each of which being associated to a respective cutting insert (20) of said at least three cutting inserts (20), wherein each one of these coolant discharge channels (31) is in fluid communication with the coolant supply recess (30),
**characterized in:**
- **that** each coolant discharge channel (31) of said at least three coolant discharge channels opens into an axially forwardly facing external surface (4c) on the partition structure (4) in which the insert seat (11) of the associated cutting insert (20) is provided at a position between this insert seat (11) and the insert pocket (10) located directly behind this partition structure (4) as seen in the intended direction of rotation (R) of the tool body (2);
- **that** each coolant discharge channel (31) of said at least three coolant discharge channels is configured to eject a jet of coolant obliquely outwards in relation to the centre axis (C) of the tool body (2) and obliquely forwards in the intended direction of rotation (R) of the tool body (2) in such a direction that the jet of coolant is configured to hit a predefined imaginary surface (S) in a target area (33) located at a distance from and behind the cutting insert (20) associated with the coolant discharge channel (31), as seen in the intended direction of rotation (R) of the tool body (2), wherein said predefined imaginary surface (S) consists of:
• a planar and annular first imaginary sub surface (S1) centred about the centre axis (C) of the tool body (2) and having a circular outer periphery (S1a) touching said axially foremost point (P3) of the cutting edge (27) on the cutting insert (20) associated with the coolant discharge channel (31), wherein this first imaginary sub surface (S1) has a circular inner periphery (S1b) with a radius (r_{b}) corresponding to the distance between the centre axis (C) of the tool body (2) and said radially innermost point (P2) of the cutting edge (27) on the cutting insert (20) associated with the coolant discharge channel (31); and
• an adjacent second imaginary sub surface (S2) constituting an annular surface of revolution generated by rotating a section (27a) of the cutting edge (27) on the cutting insert (20) associated with the coolant discharge channel (31) around the centre axis (C) of the tool body (2), this section (27a) of the cutting edge (27) being a section extending the shortest way along the cutting edge (27) from said radially outermost point (P1) of the cutting edge (27) to said axially foremost point (P3) of the cutting edge (27).

2. A milling tool according to claim 1, **characterized in that** each coolant discharge channel (31) of said at least three coolant discharge channels is rectilinear and has a longitudinal centre axis (C2), which intersects said predefined imaginary surface (S) in an imaginary intersection point (P), wherein the coolant discharge channel (31) has an outlet opening (32) provided in said axially forwardly facing external surface (4c) on the associated partition structure (4) and formed by an open downstream end of the coolant discharge channel (31), and wherein the coolant discharge channel (31) is configured to eject a jet of coolant from its outlet opening (32) in a direction substantially co-axial with its centre axis (C2).

3. A milling tool according to claim 2, **characterized in that** each coolant discharge channel (31) of said at least three coolant discharge channels has such an orientation in the tool body (2) that said imaginary intersection point (P) associated with the centre axis (C2) of the coolant discharge channel (31) is located at a distance (R_{P}) from the centre axis (C) of the tool body (2) fulfilling the following condition:
R₂<R_{P}<R₁, preferably R₂<R_{P}≤R₁-(R₁-R₃)/2, more preferably R₂+(R₃-R₂)/2≤R_{P}≤R₁-(R₁-R₃)/2, where:
- R_{P} is the distance between the centre axis (C) of the tool body (2) and the imaginary intersection point (P),
- R₁ is the distance between the centre axis (C) of the tool body (2) and said radially outermost point (P1) of the cutting edge (27) on the cutting insert (20) associated with the coolant discharge channel (31),
- R₂ is the distance between the centre axis (C) of the tool body (2) and said radially innermost point (P2) of the cutting edge (27) on the cutting insert (20) associated with the coolant discharge channel (31), and
- R₃ is the distance between the centre axis (C) of the tool body (2) and said axially foremost point (P3) of the cutting edge (27) on the cutting insert (20) associated with the coolant discharge channel (31).

4. A milling tool according to claim 2 or 3, **characterized in that** each coolant discharge channel (31) of said at least three coolant discharge channels has such an orientation in the tool body (2) that a projection of its centre axis (C2) in a first radial plane (PL1) that contains the centre axis (C) of the tool body (2) and goes through said imaginary intersection point (P) associated with the centre axis (C2) of the coolant discharge channel (31) forms an angle (θ) of 10-80°, preferably 15-70°, more preferably 20-65°, with the centre axis (C) of the tool body (2).

5. A milling tool according to any of claims 2-4, **characterized in that** each coolant discharge channel (31) of said at least three coolant discharge channels has such an orientation in the tool body (2) that an extension of its centre axis (C2) beyond the associated imaginary intersection point (P) extends in front of a first radial plane (PL1) that contains the centre axis (C) of the tool body (2) and goes through this imaginary intersection point (P), as seen in the intended direction of rotation (R) of the tool body (2), wherein a projection of the centre axis (C2) of the coolant discharge channel (31) in a reference plane that is perpendicular to the centre axis (C) of the tool body (2) forms an angle (ε) of 5-35°, preferably 5-25°, more preferably 10-20°, with a line of intersection between this reference plane and said first radial plane (PL1).

6. A milling tool according to any of claims 2-5, **characterized in that** each coolant discharge channel (31) of said at least three coolant discharge channels has such an orientation in the tool body (2) that a first radial plane (PL1) that contains the centre axis (C) of the tool body (2) and goes through said imaginary intersection point (P) associated with the centre axis (C2) of the coolant discharge channel (31) forms an angle (φ) of 10-40°, preferably 15-35°, with a second radial plane (PL2) that contains the centre axis (C) of the tool body (2) and goes through said axially foremost point (P3) of the cutting edge (27) on the cutting insert (20) associated with the coolant discharge channel (31).

7. A milling tool according to any of claims 2-6, **characterized in that** each coolant discharge channel (31) of said at least three coolant discharge channels is circular cylindrical.

8. A milling tool according to claim 7, **characterized in that** each coolant discharge channel (31) of said at least three coolant discharge channels has a diameter of 1-3 mm, preferably 1.5-2.5 mm.

9. A milling tool according to claim 7 or 8, **characterized in that** each coolant discharge channel (31) of said at least three coolant discharge channels is formed as a bore in the tool body (2).

10. A milling tool according to any of claims 2-9, **characterized in that** the outlet opening (32) of each coolant discharge channel (31) of said at least three coolant discharge channels is completely surrounded by said axially forwardly facing external surface (4c) on the associated partition structure (4).

11. A milling tool according to any of claims 1-10, **characterized in that** the distance between the centre axis (C) of the tool body (2) and said axially foremost point (P3) of the cutting edge (27) on each cutting insert (20) of said at least three cutting inserts is 16-62.5 mm, preferably 20-40 mm.

12. A milling tool according to any of claims 1-11, **characterized in that** the diameter (D) of the cutting edge (27) on each cutting insert (20) of said at least three cutting inserts is 8-22 mm, preferably 10-20 mm.

13. A milling tool according to any of claims 1-12, **characterized in that** the insert pockets (10) are equally, or at least substantially equally, distributed about the centre axis (C) of the tool body (2).

14. A milling tool according to any of claims 1-13, **characterized in that** the milling tool (1) comprises at least three intermediate coolant channels (34) provided inside the tool body (2) and configured to convey coolant from the coolant supply recess (30) to a respective coolant discharge channel (31) of said at least three coolant discharge channels, wherein each coolant discharge channel (31) of said at least three coolant discharge channels has an upstream end (31a) that opens into the associated intermediate coolant channel (34).

15. A milling tool according to claim 14, **characterized in that** each one of said at least three intermediate coolant channels (34) is formed as a bore in the tool body (2).
